# EUROPÄISCHE PATENTSCHRIFT

(11) **EP 1 383 821 B1**
(45) Veröffentlichungstag und Bekanntmachung des Hinweises auf die Patenterteilung: **30.05.2007**
(21) Anmeldenummer: 02726158.5
(22) Anmeldetag: 13.03.2002
(51) Int. Cl.: C08G 64/30

(54) **VERFAHREN ZUR HERSTELLUNG VON POLYCARBONATEN**
METHOD FOR PRODUCING POLYCARBONATES
PROCEDE DE FABRICATION DE POLYCARBONATES

(30) Priorität: 26.03.2001 DE 10114804
(43) Veröffentlichungstag der Anmeldung: 28.01.2004
(73) Patentinhaber: Bayer MaterialScience AG, 51368 Leverkusen (DE)
(72) Erfinder: KRATSCHMER, Silke, D 60488 Frankfurt (DE); HUCKS, Uwe, 46519 Alpen (DE); PREIN, Michael, D-47809 Krefeld (DE)
(86) Internationale Anmeldenummer: PCT/EP2002/002725
(87) Internationale Veröffentlichungsnummer: WO 2002/077067

(56) Entgegenhaltungen:
- EP-A- 0 564 727
- EP-A- 0 620 240
- US-A- 3 442 854
- US-A- 3 888 826
- US-A- 5 648 437
- US-A- 5 922 826

## Beschreibung

Die vorliegende Erfindung betrifft ein kontinuierliches Verfahren zur Herstellung von Polycarbonaten durch Umesterung von Diarylcarbonaten mit Dihydroxyarylverbindungen in Gegenwart von quartären Oniumverbindungen, ohne den Zusatz alkalisch wirkender Alkali- und/oder Erdalkalikatalysatoren, damit erhältliche Polycarbonate sowie Produkte (Anwendungen) aus diesen Polycarbonaten.

Die Herstellung von aromatischen Oligo- bzw. Polycarbonaten nach dem Schmelzumesterungsverfahren ist literaturbekannt und beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie in der DE-C 10 31 512 vorbeschrieben.

In den oben genannten Literaturstellen und den dort zitierten Literaturangaben werden als Katalysatoren basische Alkali-, Erdalkali- und Übergangsmetallhydroxide, -alkoholate, -carbonate, -acetate, -boranate, -hydrogenphosphate und -hydride beschrieben. Diese Katalysatoren werden gewählt, um bei geringeren Verfahrenstemperaturen und geringeren Verweilzeiten bessere Produktqualitäten erreichen zu können. Diese Katalysatoren besitzen jedoch den Nachteil, dass sie Nebenreaktionen katalysieren, die zu Fehlstellen im Polycarbonat führen. Solche möglichen Fehlstellen sind die Fehlstrukturen A - D, die später im Text definiert werden. Daneben verbleiben die Katalysatoren im Polycarbonat und können sich, da sie Verunreinigungen darstellen, negativ auf die Polymereigenschaften auswirken. Es wird daher angestrebt, durch verbesserte Verfahren ein möglichst reines Polycarbonat, aber auch farbhelles Polycarbonat zu erzeugen.

Um dementsprechend den Zusatz dieser Katalysatoren zu minimieren, werden sie oft in Kombination mit Oniumverbindungen eingesetzt, wie beispielsweise in EP-A 673 959 oder EP-A 694 572 beschrieben.

In EP-A 671 428 wird die Herstellung eines Polycarbonates durch Schmelzumesterung beschrieben, bei dem Tetraorganophosphoniumcarboxylate als Katalysatoren eingesetzt werden, die während des Herstellprozesses zerfallen. Hierbei ist nur ein diskontinuierliches Verfahren beschrieben. Eine diskontinuierliche Verfahrensweise ist aber weniger anfällig bei schwankenden Katalysatorkonzentrationen oder unzureichender Katalyse. Dies kommt jedoch bei dieser Art von Katalysatoren häufig vor, da sie unkontrolliert in Abhängigkeit der Rohstoffqualitäten zerfallen. Die Verunreinigungen können den Zerfall begünstigen oder hemmen. Bei einem vollkontinuierlichen Prozess dagegen können kleinste Schwankungen in der Katalyse zu Änderungen im Molekulargewichtsaufbau während der Reaktion führen. Bei einer kontinuierlichen Fahrweise kann dies nur sehr unzureichend oder nicht über veränderte Reaktionsbedingungen ausgeglichen werden, um Einbrüche in der Produktqualität zu vermeiden. Da solche katalytischen Schwankungen bei leicht zerfallbaren Katalysatoren zu den oben geschilderten Problemen führen, ist bislang kein vollkontinuierliches Verfahren bekannt, das ohne Alkali- oder Erdalkalikatalysatoren auskommt.

Daneben weisen die Produkte in EP-A 671 428 extrem hohe OH-Endgruppen von mehr als 1000 ppm neben einer breiten Molekulargewichtsverteilung auf, die sich in dem Verhältnis Mw/Mn zeigt. Es ist aber allgemein bekannt, dass besonders die verbleibenden OH-Endgruppen so gering wie möglich sein sollten, da sich diese bei der Thermo- und Hydrolysestabilität sowie dem Alterungsverhalten der Produkte negativ answirken.

In DE 4 238 123 A1 wird ein Zweistufenverfahren zur Herstellung von Polycarbonaten durch Schmelzeumesterung unter Verwendung von quartären Ammonium- oder Phosphoniumverbindungen als Katalysatoren beschrieben, bei dem die Temperaturen in der ersten Stufe auf 260°C und in der zweiten Stufe auf 295°C beschränkt werden. In der ersten Stufe wird die Einhaltung von Endgruppenbereichen verlangt. Die Kombination dieser Massnahmen führt bei der diskontinuierlichen Verfahrensweise zu geringen Gehalten eines in der Anmeldung beschriebenen Verzweigertyps. Eine kontinuierliche Synthese wird nicht offenbart.

In der DE A 4 312 390 wird ein Zweistufenverfahren beschrieben, durch das ebenfalls geringe Verzweigergehalte der gleichen chemischen Struktur wie in DE 4 238 123 A 1 erhalten werden. In der ersten Stufe werden als Katalysatoren Oniumverbindungen, in der zweiten Stufe Alkali- oder Erdalkalisalze eingesetzt. Die Reaktionszeiten sind verkürzt, so dass die dem Fachmann geläufige negative und bekannte Wirkung erhöhter Temperaturen auf die Produktqualität vermieden wird. Nachteilig ist der technische Aufwand, der insbesondere im technischen Maßstab für eine gleichmäßige Verteilung des in die zweite Stufe nachdosierten Katalysators in der Polymermatrix betrieben werden muss. Örtliche Überkonzentrationen des Katalysators sind nicht auszuschließen und können zu örtlich hochverzweigten Produkten führen, die dann als Quellkörper im Polycarbonat enthalten sind. Diese Quellkörper bilden Störstellen in der Polymermatrix und schränken die Verwendbarkeit der Produkte ein. Auch hier beziehen sich die Darstellungen auf einen diskontinuierlichen Prozess. Weiterhin sind die gemäß dem in DE A 4 312 390 beschriebenen Verfahren zugesetzten Metallkatalysatoren wie z.B. Alkali- und Erdalkalisalze von Nachteil, weil sie im Produkt verbleiben. Sie müssen nach abgeschlossener Polykondensation durch geeignete Additive deaktiviert werden, wodurch weitere Ionen eingetragen werden.

US-A-5,922,826 beschreibt ein Verfahren zur Herstellung von Polycarbonaten durch Umesterung, wobei die Verwendung von Unten einfügen :
einem oder zwei hintereinander geschalteten Korbreaktoren nicht beschrieben wird.

Ziel ist jedoch, für die heutigen Anwendungen im elektronischen Bereich und bei den Speichermedien im wesentlichen elektrolytfreie oder zumindest elektrolytarme, d.h. im wesentlichen ionenfreie oder zumindest ionenarme Polycarbonate zu verwenden. Elektrolytarm im Sinne der Erfindung sind Polycarbonate, deren Alkali- und Erdalkaligehalt < 60 ppb, bevorzugt < 40 ppb, besonders bevorzugt < 20 ppb beträgt.

Überraschend wurde nun gefunden, dass man bei einer kontinuierlichen Verfahrensweise den gesamten Prozess ohne Anwesenheit von alkalisch wirkenden alkali- oder erdalkalimetallhaltigen Katalysatoren in mehreren Stufen bei hohen Temperaturen und hohen Verweilzeiten, insbesondere gegen Ende des Prozesses in der Polykondensationsstufe mit wirtschaftlichen Durchsätzen bei Wahl geeigneter Reaktoren durchführen kann, ohne dass es zu erhöhten OH-Endgruppengehalten, erhöhter Verzweiger- bzw. Fehlstrukturbildung und zu Farbeinbußen kommt. Weiter wird, im Gegensatz zu EP-A 671 428, eine verbesserte Molekulargewichtsverteilung erreicht.

Bei der Katalyse mit alkali- oder erdalkalimetallhaltigen Katalysatoren sind die Temperaturen und die Verweilzeit während der Polykondensation in der Endstufe geringer. Es ist daher insbesondere überraschend, dass nach dem erfindungsgemäßen Verfahren, trotz erhöhter Temperaturen und erhöhter Verweilzeiten, bessere Produktfarben erhalten werden.

Die vorliegende Erfindung beansprucht ein kontinuierliches Verfahren zur Herstellung von Polycarbonaten durch Umesterung von Diarylcarbonaten mit Dihydroxyarylverbindungen, dadurch gekennzeichnet, dass die Kondensation in Gegenwart von quartären Oniumverbindungen als Katalysatoren durchgeführt wird, wobei die abschließende Kondensationsstufe ohne weitere Zugabe von Katalysatoren durchgeführt wird, und
dass unter Verwendung von im wesentlichen rückstandsfrei zersetzbaren Katalysatoren, nach einer Vorkondensation ohne Abtrennen der gebildeten Monohydroxyarylverbindung in sich dann daran anschließenden mehreren Flash-/Verdampferstufen bei schrittweise steigenden Temperaturen, und schrittweise fallenden Drucken ein Oligocarbonat hergestellt wird, welches danach in einem oder mehreren Korbreaktoren hintereinander, ohne Zusatz weiterer Mengen des benutzten Katalysators oder eines neuen anderen Katalysators, bei weiter steigenden Temperaturen und weiter fallenden Drucken zum fertigen Polycarbonat aufkondensiert wird. Die Katalysatoren zersetzen sich im wesentlichen rückstandsfrei bei den gewählten Reaktionsbedingungen. Unter im wesentlichen rückstandsfrei wird verstanden, dass im fertigen Polycarbonat keine Katalysatorreste, z.B. Phosphorverbindungen, nachgewiesen werden können und die Spaltprodukte in den Kondensaten der Brüden des Prozesses praktisch quantitativ gefunden werden. Die Nachweisgrenze des Phosphors im fertigen Polycarbonat beträgt 1 ppm.

Die Temperaturen über den gesamten Prozess liegen zwischen 180 und 330°C, die Drucke zwischen 15 bar absolut und 0,01 mbar.

Zur Durchführung des Verfahrens können die Reaktionspartner entweder gemeinsam aufgeschmolzen oder aber die feste Dihydroxyarylverbindung in der Diarylcarbonatschmelze oder das feste Diarylcarbonat in der Schmelze der Dihydroxyarylverbindung gelöst werden oder beide Rohstoffe werden als Schmelze, bevorzugt direkt aus der Herstellung, zusammengeführt. Die Verweilzeiten der getrennten Schmelzen der Rohstoffe, insbesondere die der Schmelze der Dihydroxyarylverbindung, werden so kurz wie möglich eingestellt. Das Schmelzegemisch kann dagegen wegen des im Vergleich zu den einzelnen Rohstoffen erniedrigten Schmelzpunktes des Rohstoffgemisches bei entsprechend niedrigeren Temperatur ohne Schaden länger verweilen. Danach wird der Katalysator, in Phenol gelöst, zugemischt und die Schmelze auf die Reaktionstemperatur erhitzt. Diese beträgt zu Beginn des technisch bedeutsamen Prozesses zur Herstellung von Polycarbonat aus Bisphenol A und Diphenylcarbonat 180 bis 220°C, vorzugsweise 190 bis 210°C, ganz besonders bevorzugt 190°C. Bei Verweilzeiten von 15 bis 90 min., vorzugsweise 30 bis 60 min., wird das Reaktionsgleichgewicht eingestellt, ohne dass die gebildete Hydroxyarylverbindung entnommen wird. Die Reaktion kann bei Atmosphärendruck, aber aus technischen Gründen auch bei Überdruck gefahren werden. Der bevorzugte Druck in technischen Anlagen beträgt 2 bis 12 bar.

Das Schmelzegemisch wird in eine erste Vakuumkammer, deren Druck auf 100 bis 400 mbar, vorzugsweise auf 150 bis 300 mbar eingestellt wird, entspannt und direkt danach in einer geeigneten Vorrichtung bei gleichem Druck wieder auf die Eintrittstemperatur erhitzt. Bei dem Entspannungsvorgang wird entstandene Hydroxyarylverbindung mit noch vorhandenen Monomeren verdampft.

Nach einer Verweilzeit von 5 bis 30 min in einer Sumpfvorlage ggf. mit Umpumpung bei gleichem Druck und gleicher Temperatur wird das Reaktionsgemisch in eine zweite Vakuumkammer, deren Druck 50 bis 200 mbar, vorzugsweise 80 bis 150 mbar beträgt, entspannt und direkt danach in einer geeigneten Vorrichtung bei gleichem Druck auf eine Temperatur von 190 bis 250°C, bevorzugt 210 bis 240°C, besonders bevorzugt 210 bis 230°C, erwärmt. Auch hierbei wird entstandene Hydroxyarylverbindung mit noch vorhandenen Monomeren verdampft.

Nach einer Verweilzeit von 5 bis 30 min in einer Sumpfvorlage ggf. mit Umpumpung bei gleichem Druck und gleicher Temperatur wird das Reaktionsgemisch in eine dritte Vakuumkammer, deren Druck 30 bis 150 mbar, vorzugsweise 50 bis 120 mbar beträgt, entspannt und direkt danach in einer geeigneten Vorrichtung bei gleichem Druck auf eine Temperatur von 220 bis 280°C, bevorzugt 240 bis 270°C, besonders bevorzugt 240 bis 260°C, erwärmt. Auch hierbei wird entstandene Hydroxyarylverbindung mit noch vorhandenen Monomeren verdampft.

Nach einer Verweilzeit von 5 bis 20 min in einer Sumpfvorlage ggf. mit Umpumpung bei gleichem Druck und gleicher Temperatur wird das Reaktionsgemisch in eine weitere Vakuumkammer, deren Druck bei 5 bis 100 mbar, bevorzugt 15 bis 100 mbar, besonders bevorzugt 20 bis 80 mbar beträgt, entspannt und direkt danach in einer geeigneten Vorrichtung bei gleichem Druck auf eine Temperatur von 250 bis 300°C, vorzugsweise 260 bis 290°C, besonders bevorzugt 260 bis 280°C, erwärmt. Auch hierbei wird entstandene Hydroxyarylverbindung mit noch vorhandenen Monomeren verdampft.

Die Zahl dieser Stufen, hier beispielhaft 4, kann zwischen 2 und 6 variieren. Die in diesen Stufen erreichte rel. Viskosität des Oligomeren liegt zwischen 1,04 und 1,20, bevorzugt zwischen 1,05 und 1,15, besonders bevorzugt zwischen 1,06 bis 1,10. Die relative Viskosität wird als Quotient aus der Viskosität des Lösungsmittels und der Viskosität des in diesem Lösungsmittel gelösten Polymers bestimmt. Sie wurde in Dichlormethan bei einer Konzentration von 5 g/l bei 25°C ermittelt.

Das so erzeugte Oligomere wird nach einer Verweilzeit von 5 bis 20 min in einer Sumpfvorlage ggf. mit Umpumpung bei gleichem Druck und gleicher Temperatur wie in der letzten Flash-/Verdampferstufe in einen Korbreaktor gefördert und bei 250 bis 310°C, bevorzugt 250 bis 290°C, besonders bevorzugt 250 bis 280°C, bei Drucken von 2 bis 15 mbar, vorzugsweise 4 bis 10 mbar, bei Verweilzeiten von 30 bis 90 min, vorzugsweise 30 bis 60 min, weiter aufkondensiert. Das Produkt erreicht eine rel. Viskosität von 1,12 bis 1,25, bevorzugt 1,13 bis 1,22, besonders bevorzugt 1,13 bis 1,20.

Die diesen Reaktor verlassende Schmelze wird in einem weiteren Korbreaktor auf die gewünschte Endviskosität gebracht. Die Temperaturen betragen 270 bis 330°C, bevorzugt 280 bis 320°C, besonders bevorzugt 280 bis 310°C, der Druck 0,01 bis 3 mbar, vorzugsweise 0,2 bis 2 mbar, bei Verweilzeiten von 60 bis 180 min, vorzugsweise 75 bis 150 min. Die rel. Viskositäten werden auf das für die vorgesehene Anwendung nötige Niveau eingestellt und betragen 1,18 bis 1,40, bevorzugt 1,18 bis 1,36, besonders bevorzugt 1,18 bis 1,34.

Die Funktion der beiden Korbreaktoren kann auch in einem Korbreaktor zusammengefasst werden.

Die Brüden werden aus allen Verfahrensstufen unmittelbar abgeleitet und beispielsweise gemäss Deutscher Patentanmeldung Nr. 1 01 00 404 aufgearbeitet.

Die für die einzelnen Verfahrensschritte geeigneten Apparate und Reaktoren sind entsprechend dem Verfahrensverlauf Wärmetauscher, Apparate oder Rührbehälter, welche die nötige Verweilzeit bei gleichbleibender Temperatur bereitstellen; Entspannungsapparate wie großvolumige Behälter, Abscheider oder Zyklone; Rührbehälter, Umlaufverdampfer, Fallfilmverdampfer oder sonstige käufliche Apparate, die den nötigen Wärmeeintrag ermöglichen; Behältnisse, welche die geforderten Verweilzeiten nach dem Erwärmen sicherstellen; ein- oder zweiwellige Korb- oder Scheibenreaktoren mit den nötigen Volumina und Filmbildungsflächen sowie einer Konstruktion, die den wachsenden Schmelzviskositäten gerecht werden.

Die Rohrleitungen zwischen den Apparaten sollten selbstverständlich so kurz wie möglich sein und die Krümmungen der Leitungen so gering wie möglich gehalten werden. Dabei sind die äußeren Rahmenbedingungen für Montagen chemischer Anlagen zu berücksichtigen.

Für die bevorzugte Ausführung des Verfahrens wird zum Erwärmen der Rohstoffschmelze ein üblicher Wärmetauscher verwendet. Als Verweilbehälter wird für die Reaktionsgleichgewichtseinstellung eine Lochbodenkolonne eingesetzt. Die Entspannungsvorgänge, das heißt die Flashverdampfungen, werden in- Zentifugalabscheidern, bevorzugt Zyklonen oder in Umlenkabscheidern durchgeführt. Das Erwärmen der aus den Zentifugalabscheidern, bevorzugt Zyklonen oder Umlenkabscheidern abfließenden Schmelze wird in Fallfilmverdampfern vorgenommen, denen Behälter zur Einstellung der Verweilzeiten folgen. Die Behälter sind mit einer Umpumpung versehen, wobei die Flüssigkeiten aus dem Fallfilmverdampfer und der Umpumpung über eingebaute Gitter- oder Lochblechkonstruktionen oder Füllkörperschüttungen in den Sumpf fliessen und gesammelt werden. Die Aufkondensation zu einem mittelviskosen Produkt wird in einem Scheiben- oder Korbreaktor durchgeführt. Die Polykondensation wird ebenfalls in einem Scheiben- oder Korbreaktor, der bei den hohen Verweilzeiten eine sehr große, sich ständig erneuernde Oberfläche am Vakuum bereitstellt, durchgeführt. Die Scheiben- oder Korbreaktoren sind entsprechend dem Schmelzviskositätszuwachs geometrisch ausgebildet. In einer speziellen Anordnung kann auch ein Scheiben- oder Korbreaktor ausreichend sein. Geeignet sind beispielsweise Reaktoren, wie sie in der DE 4 447 422 C2, oder Zweiwellenreaktoren, wie sie in der WO A 99/28 370 beschrieben sind.

Besonders geeignete Werkstoffe zur Herstellung der Apparate, Reaktoren, Rohrleitungen, Pumpen und Armaturen sind nicht rostende Stähle vom Typ Cr Ni (Mo) 18/10 wie z. B. 1.4571 oder 1. 4541 (Stahlschlüssel 2001, Verlag: Stahlschlüssel Wegst GmbH, Th-Heuss-Straße 36, D-71672 Marbach) und Ni-Basislegierungen vom Typ C, wie z.B. 2.4605 oder 2.4610 (Stahlschlüssel 2001, Verlag: Stahlschlüssel Wegst GmbH, Th-Heuss-Straße 36, D-71672 Marbach). Die nicht rostenden Stähle werden bis zu Prozesstemperaturen von etwa 290°C und die Ni-Basislegierungen bei Prozesstemperaturen oberhalb von etwa 290°C benutzt.

Die nach dem erfindungsgemäßen Verfahren erhältlichen thermoplastischen Polycarbonate sind ebenfalls Bestandteil der vorliegenden Erfindung. Sie haben einen äußerst geringen Gehalt von Kationen und Anionen von jeweils weniger als 60 ppb, bevorzugt < 40 ppb und besonders bevorzugt < 20 ppb, wobei als Kationen solche von Alkali- und Erdalkalimetallen vorliegen, welche beispielsweise als Verunreinigung aus den verwendeten Rohstoffen und den Phosphonium- und Ammoniumsalzen stammen können. Weitere Ionen wie Fe-, Ni-, Cr-, Zn-, Sn, Mo-, Al-Ionen und ihre Homologen können in den Rohstoffen enthalten sein oder durch Abtrag oder Korrosion aus den Werkstoffen der benutzten Anlage stammen. Der Gehalt dieser Ionen ist in der Summe kleiner als 2 ppm, bevorzugt kleiner als 1 ppm und besonders bevorzugt kleiner 0,5 ppm.

Angestrebt werden also geringste Mengen, die nur durch Verwendung reinster Rohstoffe erreicht werden können. Derart reine Rohstoffe sind z.B. nur nach Reinigungsverfahren wie Umkristallisieren, Destillieren, Umfällen mit Wäschen u. ä. erhältlich.

Als Anionen liegen solche von anorganischen Säuren und von organischen Säuren in äquivalenten Mengen vor (z.B. Chlorid, Sulfat, Carbonat, Phosphat, Phosphit, Oxalat, u.a.)

Die Polycarbonate zeichnen sich auch dadurch aus, dass sie keine nachweisbaren Mengen eingebauter Spalt- oder Zersetzungsprodukte mit reaktiven Endgruppen, die während des Umesterungsprozesses gebildet werden, enthalten. Solche Spalt- oder Zersetzungsprodukte sind beispielsweise Isopropenylmonohydroxyaryle oder deren Dimere.

Die erhaltenen mittleren Gewichtsmolekulargewichte betragen 15.000 bis 40.000, bevorzugt 18.000 bis 36.000, besonders bevorzugt 18.000 bis 34.000, wobei das mittlere Gewichtsmolekulargewicht über die relative Viskosität bestimmt wurde.

Der Gehalt an OH-Endgruppen der erfindungsgemäß erhältlichen Polycarbonate liegt zwischen 50 und 750 ppm, vorzugsweise zwischen 70 und 500 ppm, besonders bevorzugt zwischen 90 und 300 ppm.

Der Gehalt an Fehlstrukturen A - D im Polycarbonat wird nach Totalverseifung durch HPLC bestimmt. Dafür wird das Polycarbonat mit Natriummethylat durch Kochen verseift, anschließend angesäuert, filtriert und bis zur Trockne eingeengt. Der Rückstand wird in Acetonitril gelöst und per HPLC detektiert.

Das erfindungsgemäße Polycarbonat entspricht der Formel (1) 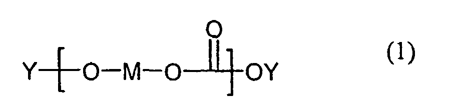 wobei die Klammer eine sich wiederholende Struktureinheit bezeichnet,
worin M
Z oder eine Fehlstruktur A, B, C und/oder D sein kann,
wobei Z einen aromatischen Rest darstellt, der später beschrieben wird,
worin die Fehlstruktur A 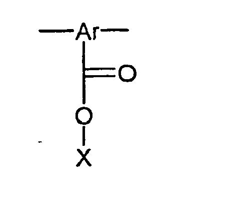 einen Gehalt von 800 ppm
bevorzugt von 750 ppm
besonders bevorzugt von 500 ppm
nicht überschreitet 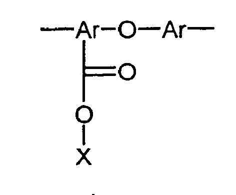 worin die Fehlstruktur B
einen Gehalt von 350 ppm
bevorzugt von 250 ppm
besonders bevorzugt von 70 ppm
nicht überschreitet
worin die Fehlstruktur C 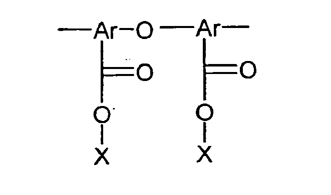 einen Gehalt von 200 ppm
bevorzugt von 150 ppm
besonders bevorzugt von 60 ppm
nicht überschreitet
worin die Fehlstruktur D 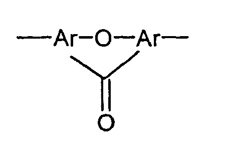 einen Gehalt von 750 ppm
bevorzugt von 300 ppm
besonders bevorzugt von 150 ppm
nicht überschreitet
worin Y
H oder 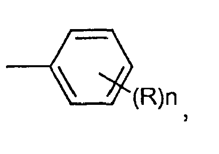 wobei
R unabhängig voneinander gleiche oder verschiedene Reste H, C₁-C₂₀ Alkyl, C₆H₅ und C(CH₃)₂C₆H₅ sein kann,
bedeutet, und
n für 0, 1 oder 2 steht,
wobei X
Y oder -(MOCOO)Y bedeutet, und
M und Y wie oben beschrieben bedeuten.

Die Summe aller Fehlstrukturen A - D sollte 1.000 ppm, bevorzugt 700 ppm, besonders bevorzugt 550 ppm nicht überschreiten.

Das Verfahren hat gegenüber dem Stand der Technik folgende überraschenden Vorteile:
Trotz eines schlecht steuerbaren Katalysatorzerfalls können mit diesem kontinuierlichen Verfahren reproduzierbar Polycarbonate erhalten werden, die die gewünschten Molekulargewichte, geringe Gehalte an Fehlstrukturen, geringe, nicht nachweisbare Spuren eingebauter Spalt- oder Zersetzungsprodukte des Umesterungsprozesses, geringste Mengen Alkali- und/oder Erdalkaliverbindungen und geringe OH-Endgruppen-Gehalte aufweisen. Die Polycarbonate zeichnen sich weiter dadurch aus, das sie nicht mehr nachweisbare Mengen an Katalysator bzw. Katalysatorresten, z.B. Phosphorverbindungen, enthalten.

Da die Alkali- und Erdalkalimetall-Kationen fehlen, die sonst in der Polykondensationsstufe anwesend sind, entfällt auch die Maßnahme, den Katalysator nach abgeschlossener Polycarbonatbildung zu deaktivieren, wodurch weitere Ionen eingetragen würden.

Der Gehalt an Diarylcarbonaten im fertigen Polycarbonat ist merklich geringer, als wenn die Polykondensation in der letzten Reaktionsstufe in Anwesenheit von Katalysatoren, beispielsweise mit alkali- oder erdalkalimetallhaltigen Katalysatoren, durchgeführt wird.

Fehlstrukturen durch Nebenreaktionen, insbesondere Verzweigungsstrukturen der Formel A - D sind nur in überraschend geringen Mengen vorhanden und führen im Gegensatz zu den sonst aus Schmelzumesterungsverfahren erhältlichen Polycarbonaten nicht zu erhöhten Schmelzviskositäten (Strukturviskosität) und gleichen damit Produkten, die nach dem Lösungsverfahren erhalten werden.

Das nach den erfindungsgemäßen Verfahren erhältliche Polycarbonat unterscheidet sich also deutlich von den bisher bekannten Polycarbonaten, die nach dem Umesterungsverfahren hergestellt sind, bei dem der Katalysator über den gesamten Prozess wirksam ist oder nach Abschluss der Oligokondensation für die anschliessende Polykondensation zugegeben wird.

Das Ergebnis guter Produktqualitäten ist insbesondere deshalb überraschend, weil es mit einer Fahrweise bei höherer Temperatur und längeren Verweilzeiten gegenüber einer Fahrweise bei geringeren Temperaturen und kürzeren Verweilzeiten, hier nur in Gegenwart von alkalisch wirkenden alkali- und/oder erdalkalisalzhaltigen Katalysatoren möglich, erzielt wird. Bei einer höheren und längeren thermischen Belastung des Produktes erwartet der Fachmann Qualitätseinbußen hinsichtlich der Farbe des Produktes und des Gehaltes von Fehlstrukturen. Diese Probleme treten beim erfindungsgemäßen Verfahren überraschenderweise nicht auf. Es lag dem Fachmann ausgehend vom Stand der Technik daher fern, zur Erzeugung im wesentlichen elektrolytfreier bzw. -armer Polycarbonate in der Polykondensation, also letzten Stufe des Verfahrens, ohne eine weitere Zugabe an Katalysator zu arbeiten und dies durch höhere Temperaturen und Verweilzeiten auszugleichen.

Für das erfindungsgemäße Verfahren geeignete Dihydroxyarylverbindungen sind solche der Formel (II)

HO-Z-OH (II)

in denen Z ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Beispiele für Dihydroxyarylverbindungen der Formel (II) sind
Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
α,α'- Bis-(hydroxyphenyl)-diisopropylbenzole
sowie deren kernalkylierte und kernhalogenierte Verbindungen.

Diese und weitere geeignete andere Dihydroxyarylverbindungen sind z. B. in den US-PS 3 028 365, 3 148 172, 3 275 601, 2 991 273, 3 271 367, 3 062 781, 2 970 131 und 2 999 846, in DE-A 1 570 703, 2 063 050, 2 063 052, 2 211 0956, der französischen Patentschrift 1 561 518 und in der Monographie "H. Schnell, Chemistry and Physics of Polycarbonates, Interscience Publishers, New York 1964" beschrieben.

Bevorzugte Dihydroxyarylverbindungen sind beispielsweise:
4,4'-Dihydroxydiphenyl,
2,2-Bis-(4-hydroxyphenyl)propan,
2,4-Bis-(4-hydroxyphenyl)-2-methylbutan,
1,1-Bis-(4-hydroxyphenyl)cyclohexan,
1,1-Bis-(4-hydroxyphenyl)-4-methylcyclohexan,
α,α'-Bis-(4-hydroxyphenyl)-p-diisopropylbenzol,
α,α'- Bis-(4-hydroxyphenyl)-m-diisopropylbenzol,
Bis-(4-hydroxyphenyl)sulfon,
Bis-(4-hydroxyphenyl)methan,
1,1-Bis-(4-hydroxyphenyl)-3,3,5-trimethylcyclohexan,
Bis-(2,6-dimethyl-4-hydroxyphenyl)propan,
Bis-(4-hydroxyphenyl)hexafluorpropan,
(4-Hydroxyphenyl)-1-phenylethan,
(4-Hydroxyphenyl)diphenylmethan,
Dihydroxydiphenylether,
4,4'-Thiobisphenol,
Bis-(4-Hydroxyphenyl)-1-(1-naphthyl)ethan,
Bis-(4-Hydroxyphenyl)-1-(2-naphthyl)ethan,
Dihydroxy-3-(4-hydroxyphenyl)-1,1,3-trimethyl-1*H*-inden-5-ol,
Dihydroxy-1-(4-hydroxyphenyl)-1,3,3-trimethyl-1*H*-inden-5-ol,
2,2',3,3'-Tetrahydro-3,3,3',3'-tetramethyl-1,1'-Spirobi[1*H*-inden]-5,5'-diol.

Besonders bevorzugt sind
Resorcin,
Bis-(4-Hydroxyphenyl)-1-(1-naphthyl)ethan,
Bis-(4-Hydroxyphenyl)-1-(2-naphthyl)ethan,
2,2-Bis-(4-hydroxyphenyl)propan,
α,α'-Bis-(4-hydroxyphenyl)-p-diisopropylbenzol,
α,α'-Bis-(4-hydroxyphenyl)-m-diisopropylbenzol,
1,1-Bis-(4-hydroxyphenyl)cyclohexan,
Bis-(4-hydroxyphenyl)-3,3,5-trimethylcyclohexan,
Bis-(4-Hydroxyphenyl)diphenylmethan.

Ganz besonders bevorzugt
Bis-(4-hydroxyphenyl)-3,3,5-trimethylcyclohexan,
4,4'-Dihydroxydiphenyl,
2,2-Bis-(4-hydroxyphenyl)propan.

Es können sowohl eine Dihydroxyarylverbindung der Formel (II) unter Bildung von Homopolycarbonaten als auch mehrere Dihydroxyarylverbindungen der Formel (II) unter Bildung von Copolycarbonaten verwendet werden.

Die Dihydroxyarylverbindungen können auch mit Restgehalten der Monohydroxyarylverbindungen, aus denen sie hergestellt wurden, eingesetzt werden. Die Gehalte können bis zu 20 %, vorzugsweise 10 %, besonders bevorzugt bis 5 % und ganz besonders bevorzugt bis zu 2 % betragen.

Diarylcarbonate im Sinne vorliegender Erfindung sind solche der Formel (III) 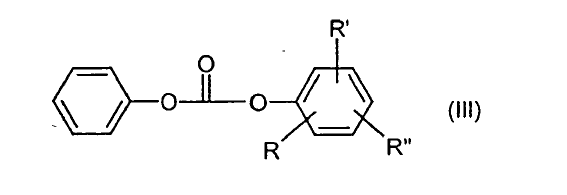 und Formel (IV), 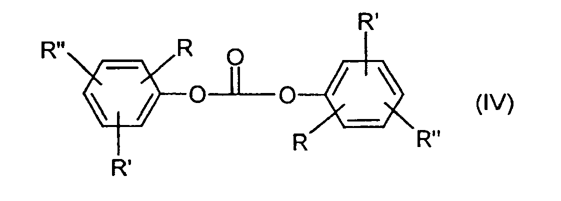 wobei R, R' und R" unabhängig voneinander H, gegebenenfalls verzweigte C₁-C₃₄-Alkyl/Cycloalkyl, C₇-C₃₄-Alkaryl oder C₆-C₃₄-Aryl darstellen können, beispielsweise Diphenylcarbonat,
Butylphenyl-phenylcarbonat, Di-Butylphenylcarbonat,
Isobutylphenyl-phenylcarbonat, Di-Isobutylphenylcarbonat,
tert-Butylphenyl-phenylcarbonat, Di-tert-Butylphenylcarbonat,
n-Pentylphenyl-phenylcarbonat, Di-(n-Pentylphenyl)carbonat,
n-Hexylphenyl-phenylcarbonat, Di-(n-Hexylphenyl)carbonat,
Cyclohexylphenyl-phenylcarbonat, Di-Cyclohexylphenylcarbonat,
Phenylphenol-phenylcarbonat, Di-Phenylphenolcarbonat,
Isooctylphenyl-phenylcarbonat, Di-Isooctylphenylcarbonat,
n-Nonylphenyl-phenylcarbonat, Di-(n-Nonylphenyl)carbonat,
Cumylphenyl-phenylcarbonat, Di-Cumylphenylcarbonat,
Naphthylphenyl-phenylcarbonat, Di-Naphthylphenylcarbonat,
Di-tert-Butylphenyl-phenylcarbonat, Di-(Di-tert-Butylphenyl)carbonat,
Dicumylphenyl-phenylcarbonat, Di-(Dicumylphenyl)carbonat,
4-Phenoxyphenyl-phenylcarbonat, Di-(4-Phenoxyphenyl)carbonat,
3-Pentadecylphenyl-phenylcarbonat, Di-(3-Pentadecylphenyl)carbonat
Tritylphenyl-phenylcarbonat, Di-Tritylphenylcarbonat,
bevorzugt
Diphenylcarbonat,
tert-Butylphenyl-phenylcarbonat, Di-tert-Butylphenylcarbonat,
Phenylphenol-phenylcarbonat, Di-Phenylphenolcarbonat,
Cumylphenyl-phenylcarbonat, Di-Cumylphenylcarbonat,
besonders bevorzugt Diphenylcarbonat.

Die Diarylcarbonate können auch mit Restgehalten der Monohydroxyarylverbindungen, aus denen sie hergestellt wurden, eingesetzt werden. Die Gehalte können bis zu 20 %, vorzugsweise 10 %, besonders bevorzugt bis 5 % und ganz besonders bevorzugt bis zu 2 % betragen.

Daneben können die als Carbonate eingesetzten phenolischen Verbindungen auch direkt als Monohydroxyarylverbindung neben einem der genannten Carbonate verwendet werden, um die Endgruppen des Polycarbonats zu beeinflussen. Dabei ist eine Monohydroxyarylverbindung zu wählen, deren Siedepunkt über dem der Monohydroxyarylverbindung, aus der das Diarylcarbonat gebildet wurde, liegt. Bevorzugte Mischungen sind solche mit Diphenylcarbonat. Nach dem erfindungsgemäßen Verfahren besteht die Möglichkeit, die Monohydroxyarylverbindung zu jedem Zeitpunkt der Reaktion zuzugeben, bevorzugt zu Beginn der Reaktion, und die Zugabe kann in mehrere Portionen aufgeteilt werden. Der Anteil an freier Monohydroxyarylverbindung kann 0,4 - 17 Mol-%, bevorzugt 1,3 - 8,6 Mol-% (bezogen auf die Dihydroxyarylverbindung) betragen. Dabei kann die Zugabe sowohl vor der Reaktion als auch ganz oder teilweise während der Reaktion erfolgen.

Bezogen auf die Dihydroxyarylverbindung werden die Diarylcarbonate mit 1,02 bis 1,30 Mol, bevorzugt mit 1,04 bis 1,26 Mol, besonders bevorzugt mit 1,06 - 1,22 Mol pro Mol Dihydroxyarylverbindung eingesetzt. Es können auch Mischungen der oben genannten Diarylcarbonate eingesetzt werden.

Für die Synthese werden Ammonium- oder Phosphoniumkatalysatoren eingesetzt, die für die Zwecke dieser Anmeldung gemeinsam auch als Oniumverbindungen bezeichnet werden. Sie werden bevorzugt in Mengen von 10⁻⁸ bis 10⁻³ Mol, bezogen auf ein Mol Dihydroxyarylverbindung, besonders bevorzugt in Mengen von 10⁻⁷ bis 10⁻⁴ Mol, eingesetzt.

Als Katalysator für die Herstellung der erfindungsgemäßen Polycarbonate können Phosphoniumsalze verwendet werden, gegebenenfalls in Kombination mit anderen geeigneten Katalysatoren, die nicht zu erhöhten Gehalten der Fehlstrukturen A - D führen und sich bei erhöhten Temperaturen zersetzen, wie z.B. andere Oniumverbindungen.

Phosphoniumsalze im Sinne der Erfindung sind solche der Formel (VII), 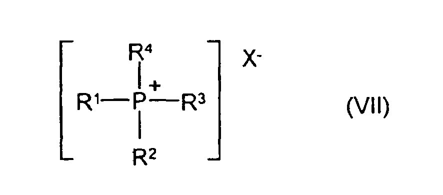 wobei R¹⁻⁴ dieselben oder verschiedene C₁-C₁₀-Alkyle, C₆-C₁₀-Aryle, C₇-C₁₀-Arylalkyle oder C₅-C₆-Cycloalkyle sein können, bevorzugt Methyl oder C₆-C₁₄-Aryle, besonders bevorzugt Methyl oder Phenyl, und X⁻ ein Anion wie Hydroxid, Sulfat, Hydrogensulfat, Hydrogencarbonat, Carbonat, ein Halogenid, bevorzugt Chlorid, oder ein Alkoholat der Formel OR sein kann, wobei R C₆-C₁₄-Aryl oder C₇-C₁₂-Arylalkyl, bevorzugt Phenyl, sein kann. Solche Verbindungen sind in "Houben-Weyl, Methoden der organischen Chemie", Thieme Verlag Stuttgart, 4. Auflage, 1963, Vol. 12.1, S. 47, 107 - 147, als thermisch labile Posphoniumsalze beschrieben. Bevorzugte Katalysatoren sind
Tetraphenylphosphoniumchlorid,
Tetraphenylphosphoniumhydroxid,
Tetraphenylphosphoniumphenolat,
besonders bevorzugt Tetraphenylphosphoniumphenolat.

Bevorzugte Mengen an Phosphoniumsalzkatalysatoren sind 10⁻⁸ bis 10⁻³ Mol pro Mol Diphenol und die am meisten bevorzugten Katalysatormengen sind 10⁻⁷ bis 10⁻⁴ Mol pro Mol Diphenol.

Die Zugabe der Katalysatoren erfolgt in Lösung, um bei der Dosierung schädliche Überkonzentrationen zu vermeiden. Die Lösungsmittel sind system- und verfahrensinhärente Verbindungen wie beispielsweise Dihydroxyarylverbindungen, Diarylcarbonate oder Monohydroxyarylverbindungen. Besonders bevorzugt sind Monohydroxyarylverbindungen, weil dem Fachmann geläufig ist, dass sich die Dihydroxyarylverbindungen und Diarylcarbonate bei schon leicht erhöhten Temperaturen, insbesondere unter Katalysatoreinwirkung, leicht verändern und zersetzen. Die entstehenden Verbindungen mindern die Polycarbonatqualität. Beim technisch bedeutsamen Umesterungsverfahren zur Herstellung von Polycarbonat ist die bevorzugte Verbindung Phenol. Phenol bietet sich auch deshalb schon zwingend an, weil der gewählte Katalysator Tetraphenylphosphoniumphenat bei der Herstellung als Mischkristall mit Phenol isoliert wird.

Die Entfernung der Ammonium- und der Phosphoniumverbindungen erfolgt durch thermische Zersetzung. Die Spaltprodukte werden im Destillat wiedergefunden, und Reste des Katalysators sind im Polycarbonat nicht mehr nachweisbar (Nachweisgrenze 1 ppm). Der überwiegende Anteil der Spaltprodukte besteht aus Triphenylphosphin und Triphenylphosphinoxid.

Die Polycarbonate können gezielt verzweigt werden und können daher geringe Mengen von 0,02 bis 3,6 Mol% (bezogen auf die Dihydroxyarylverbindung) an Verzweigern enthalten. Geeignete Verzweiger sind die für die Polycarbonatherstellung geeigneten Verbindungen mit drei und mehr funktionellen Gruppen, vorzugsweise solche mit drei oder mehr als drei phenolischen OH-Gruppen, beispielsweise 1,1,1-Tri-(4-hydroxyphenyl)ethan und Isatinbiskresol.

Durch das chemische Gleichgewicht bedingte und durch Verfahrensparameter wie Temperatur, Druck und Verweilzeit gegebene Restgehalte an Monomeren können bei Bedarf durch geeignete Ausdampfverfahren weiter reduziert werden.

Zur Änderung der Eigenschaften können den erfindungsgemäßen Polycarbonaten Hilfs- und Verstärkungsstoffe zugemischt werden. Als solche sind u.a. in Betracht zu ziehen: Thermo- und UV-Stabilisatoren, Fließhilfsmittel, Entformungsmittel, Flammschutzmittel, Pigmente, fein zerteilte Mineralien, Faserstoffe, z.B. Alkyl- und Arylphosphite, -phosphate, -phosphane, niedermolekulare Carbonsäureester, Halogenverbindungen, Salze, Kreide, Quarzmehl, Glas- und Kohlenstofffasern, Pigmente und deren Kombination. Solche Verbindungen werden z.B. in WO-A 99/55772, S. 15 - 25, und in "Plastics Additives", R. Gächter und H. Müller, Hanser Publishers 1983, beschrieben.

Weiterhin können den erfindungsgemäßen Polycarbonaten auch andere Polymere zugemischt werden, z.B. Polyolefine, Polyurethane, Polyester, Acrylnitrilbutadienstyrol und Polystyrol.

Der Zusatz dieser Stoffe erfolgt vorzugsweise auf herkömmlichen Aggregaten zum fertigen Polycarbonat, kann jedoch, je nach den Erfordernissen, auch auf einer anderen Stufe des Herstellverfahrens erfolgen.

Die nach dem erfindungsgemäßen Verfahren erhältlichen Polycarbonate können auf üblichen Maschinen, beispielsweise auf Extrudern oder Spritzgußmaschinen, zu beliebigen Formkörpern, beispielsweise zu Folien oder Platten, in üblicher Weise verarbeitet werden.

Mögliche Anwendungen der erfindungsgemäßen Polycarbonate sind
1. Sicherheitsscheiben, die bekanntlich in vielen Bereichen von Gebäuden, Fahrzeugen und Flugzeugen erforderlich sind, sowie als Schilde von Helmen.
2. Herstellung von Extrusions- und Lösungsfolien für Displays oder Elektromotoren, auch Skifolien.
3. Herstellung von Blaskörpern (siehe beispielsweise US-Patent 2 964 794).
4. Herstellung von lichtdurchlässigen Platten, insbesondere von Hohlkammerplatten, beispielsweise zum Abdecken von Gebäuden wie Bahnhöfen, Gewächshäusern und Beleuchtungsanlagen.
5. Zur Herstellung von Ampelgehäusen oder Verkehrsschildern.
6. Zur Herstellung von Schaumstoffen (siehe beispielsweise DE-B 1 031 507).
7. Zur Herstellung von Fäden und Drähten (siehe beispielsweise DE-B 1 137 167 und DE-A 1 785 137).
8. Als transluzente Kunststoffe mit einem Gehalt an Glasfasern für lichttechnische Zwecke (siehe beispielsweise DE-A 1 554 020).
9. Zur Herstellung von Präzisionsspritzgussteilchen, wie beispielsweise Linsenhalterungen. Hierzu verwendet man Polycarbonate mit einem Gehalt an Glasfasern, die gegebenenfalls zusätzlich etwa 1 - 10 Gew.-% MoS₂, bezogen auf Gesamtgewicht, enthalten.
10. Optische Anwendungen, wie optische Speicher (CD, DVD), Schutzbrillen oder Linsen für Foto- und Filmkameras (siehe beispielsweise DE-A 2 701 173).
11. Lichtübertragungsträger, insbesondere als Lichtleiterkabel (siehe beispielsweise EP-A1 0 089 801).
12. Als Elektroisolierstoffe für elektrische Leiter und für Steckergehäuse sowie Steckverbinder.
13. Als Trägermaterial für organische Fotoleiter.
14. Zur Herstellung von Leuchten, z.B. Scheinwerferlampen, als sogenannte "headlamps" oder Streulichtscheiben oder Lampenabdeckungen.
15. Für medizinische Anwendungen, z.B. Oxygenatoren, Dialysatoren.
16. Für Lebensmittelanwendungen, wie z.B. Flaschen, Geschirr und Schokoladenformen.
17. Für Anwendungen im Automobilbereich, wo Kontakt zu Kraftstoffen und Schmiermitteln auftreten kann.
18. Für Sportartikel, wie z.B. Slalomstangen.
19. Für Haushaltsartikel, wie z.B. Küchenspülen und Briefkastengehäuse.
20. Für Gehäuse, wie z.B. Elektroverteilerschränke, Elektrogeräte, Haushaltsgeräte.
21. Bauteile von Haushaltsartikeln, Elektro- und Elektronikgeräten.
22. Zur Herstellung von Motorrad- und Schutzhelmen.
23. Automobilteile, wie Verglasungen, Armaturenbretter, Karosserieteile und Stoßdämpfer.
24. Für sonstige Anwendungen, wie z.B. Stallmasttüren oder Tierkäfige

Insbesondere sind die erfindungsgemäßen Polycarbonate zur Verwendung im Bereich der Elektronik, insbesondere optischer, magnetooptischer und anderer Datenspeicher, geeignet.

Die Produkte aus dem erfindungsgemäßen Polycarbonat sind ebenfalls Bestandteil der vorliegenden Erfindung.

### Beispiel 1

Aus einer Vorlage werden 94,7 kg/h Schmelzegemisch, bestehend aus 49,8 kg Diphenylcarbonat/h (232,7 mol/h) und 44,9 kg Bisphenol A/h (196,9 mol/h), unter Zusetzen von 0,0034 kg Tetraphenylphosphoniumphenolat/h (0,0079 mol/h) gelöst in 0,1 kg Phenol/h durch einen Wärmetauscher gepumpt, auf 190°C erwärmt und durch eine Verweilkolonne geführt. Die mittlere Verweilzeit beträgt 45 Minuten.

Die Schmelze wird dann über ein Entspannungsventil in einen unter 200 mbar stehenden Abscheider geleitet. Die abfliessende Schmelze wird in einem, ebenfalls unter 200 mbar stehenden, Fallfilmverdampfer wieder auf 190°C erwärmt und in einer Vorlage aufgefangen. Nach einer Verweilzeit von 20 Minuten wird die Schmelze in die nächsten drei, gleichartig aufgebauten Stufen gepumpt. Die Bedingungen in der 2. / 3. /4. Stufe sind 80 / 50 / 25 mbar; 230 / 250 /270°C und 20 / 10 / 10 Minuten. Das entstandene Oligomere hat eine rel. Viskosität von 1,068. Alle Brüden werden über Druckregelungen in eine unter Vakuum stehende Kolonne geführt und als Kondensate abgeleitet.

Das Oligomer wird in einem sich anschliessenden Korbreaktor bei 270°C und 7,3 mbar bei einer Verweilzeit von 45 Minuten zu einem höhermolekularen Oligomeren aufkondensiert. Die rel. Viskosität beträgt 1,134. Die Brüden werden kondensiert.

Das Oligomere wird in einem weiteren Korbreaktor bei 311°C und 1,0 mbar auf eine rel. Viskosität von 1,277 aufkondensiert. Als mittlere Verweilzeit werden 130 Minuten ermittelt. Die Brüden werden hinter bzw. in der Vakuumanlage kondensiert.

Das Polycarbonat enthält 245 ppm OH-Endgruppen und es werden folgende Verzweigergehalte gemessen: Struktur A: 226 ppm; Struktur B: 6 ppm; Struktur C: < 5 ppm; Struktur D: 138 ppm.

In den vereinigten Kondensaten der Brüdenströme wird eine Menge von 0,000234 kg/h Phosphor nachgewiesen. Verglichen mit der eingesetzten Menge aus dem Katalysator (gleich 0,000243 kg/h) sind das 96,3 %. Es verbleiben demnach keine wesentlichen Mengen Katalysatorreste oder Zersetzungsprodukte im Produkt. Phosphor im Polycarbonat konnte nicht nachgewiesen werden (unter 1 ppm).

### Beispiele 2 bis 8

Durch Variation des Verhältnisses Diphenylcarbonat zu Bisphenol A werden Polycarbonate mit vergleichbaren OH-Endgruppengehalten, aber unterschiedlichen relativen Viskositäten, hergestellt. Hierfür bleiben bis auf die Vakua alle Bedingungen wie Durchsatz, Katalysator und Temperaturen konstant. Die Ergebnisse sind in Tabelle 1 dargestellt.

**Tabelle 1:**

| Versuch | Rel. Viskosität | ppm -OH | ppb Na | Temp. Endreaktor | YI | ppm DPC |
|---|---|---|---|---|---|---|
| 2 | 1,202 | 290 | 0 | 310 | 3,54 | 553 |
| 3 | 1,203 | 280 | 0 | 310 | 3,77 | 534 |
| 4 | 1,218 | 290 | 0 | 310 | 3,23 | 444 |
| 5 | 1,253 | 290 | 0 | 310 | 3,00 | 268 |
| 6 | 1,274 | 280 | 0 | 310 | 2,92 | 217 |
| 7 | 1,277 | 230 | 0 | 311 | 2,77 | 227 |
| 8 | 1,287 | 250 | 0 | 311 | 2,69 | 195 |

### Vergleichsbeispiele 9 bis 14:

In einer weiteren Versuchsserie werden dem Schmelzegemisch die gleiche Tetraphenylphosphoniumphenolat-Lösung in Phenol, jedoch angereichert mit unterschiedlichen Mengen Natriumphenolat/h, zugeführt. Die entsprechenden Mengen und die äquivalente Menge Natrium in ppb, bezogen auf Polycarbonat, sind in Tabelle 2 genannt. Durch Variation des Verhältnisses Diphenylcarbonat zu Bisphenol A werden Polycarbonate mit vergleichbaren OH-Endgruppengehalten, aber unterschiedlichen relativen Viskositäten, hergestellt. Die weiteren Daten sind in Tabelle 2 angegeben.

**Tabelle 2:**

| Versuch | Rel. Viskosität | ppm -OH | entspricht g Na-phenolat/h | ppb Na | Temp. Endreaktor | YI | Ppm DPC |
|---|---|---|---|---|---|---|---|
| 9 | 1,207 | 290 | 0,0630 | 250 | 290 | 3,69 | 585 |
| 10 | 1,249 | 310 | 0,0315 | 125 | 310 | 3,77 | 378 |
| 11 | 1,251 | 310 | 0,0630 | 250 | 300 | 3,84 | 348 |
| 12 | 1,276 | 290 | 0,0630 | 250 | 310 | 4,00 | 288 |
| 13 | 1,287 | 260 | 0,0252 | 100 | 310 | 3,54 | 260 |
| 14 | 1,292 | 250 | 0,0252 | 100 | 310 | 3,38 | 232 |

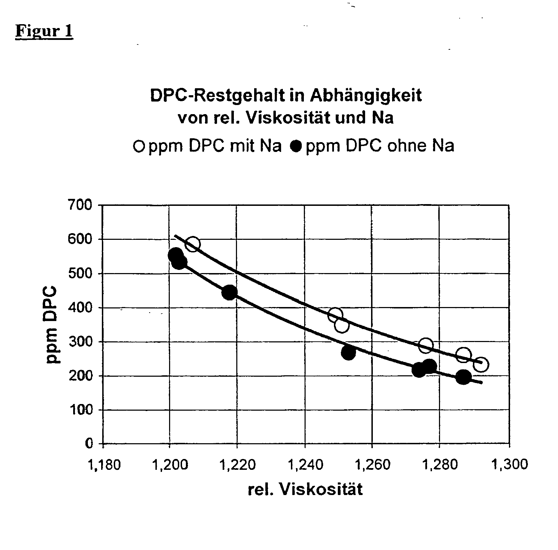

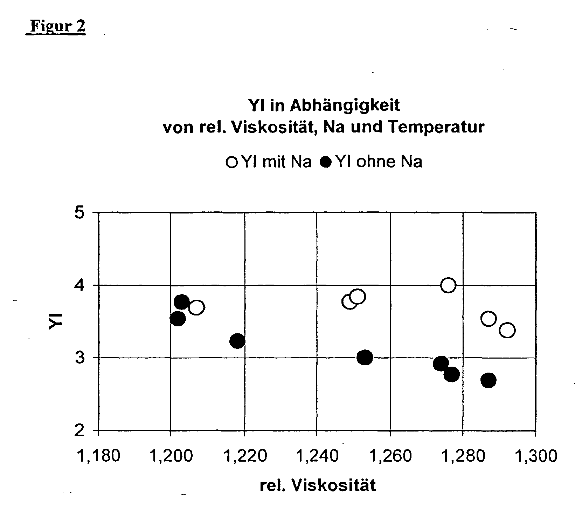

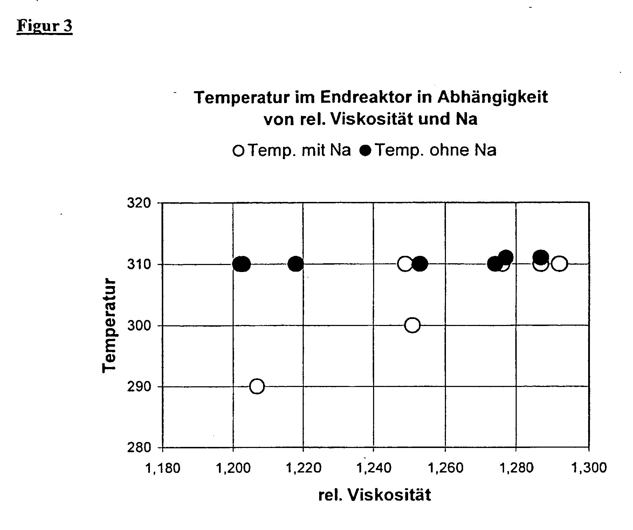

Die Versuchsergebnisse sind in den Figuren 1 bis 3 dargestellt.

## Patentansprüche

1. Kontinuierliches Verfahren zur Herstellung von Polycarbonaten durch Umesterung von Diarylcarbonaten mit Dihydroxyarylverbindungen, **dadurch gekennzeichnet, dass** die Kondensation in Gegenwart von quartären Oniumverbindungen als Katalysatoren durchgeführt wird, wobei die abschließende Polykondensationsstufe ohne weitere Zugabe von Katalysatoren durchgeführt wird und,
dass unter Verwendung von im wesentlichen rückstandsfrei zersetzbaren quartären Oniumverbindungen als Katalysatoren, nach einer Vorkondensation ohne Abtrennen der gebildeten Monohydroxyarylverbindung in sich dann daran anschließenden mehreren Flash-/Verdampferstufen bei schrittweise steigenden Temperaturen und schrittweise fallenden Drucken durch Abtrennen der gebildeten Monohydroxyarylverbindung ein Oligocarbonat hergestellt wird, welches danach in einem oder zwei hintereinandergeschalteten Korbreaktoren, ohne Zusatz weiterer Mengen des benutzten Katalysators oder eines neuen anderen Katalysators, bei weiter steigenden Temperaturen und weiter fallenden Drucken zum fertigen Polycarbonat aufkondensiert wird.

2. Polycarbonat, **dadurch gekennzeichnet, dass** es nach dem kontinuierlichen Verfahren gemäß Ansprüch 1 erhältlich ist.

3. Polycarbonat gemäß Anspruch 2, **dadurch gekennzeichnet, dass** es arm an Alkali- und Erdalkaliionen ist.

4. Polycarbonat gemäß Ansprüche 2 bis 3, **dadurch gekennzeichnet, dass** eingebaute Spalt-und Zersetzungsprodukte des Umesterungsprozesses nicht nachweisbar sind.

5. Polycarbonat gemäß Ansprüche 2 bis 4, **dadurch gekennzeichnet, dass** es weniger als 1 ppm Phosphor enthält.

6. Produkte erhältlich aus Polycarbonat gemäß der Ansprüche 2 bis 5.

7. Speichermedien, gemäß Anspruch 6.

8. Verfahren nach den Ansprüch 1, **dadurch gekennzeichnet, dass** die Oniumverbindung Tetraphenylphoshonium-Phenolat ist.

9. Verfahren nach den Ansprüchen 1 und 8, **dadurch gekennzeichnet, dass** das Tetraphenylphosphonium-Phenolat in phenolischer Lösung zugegeben wird.

10. Verfahren nach den Ansprüchen 1, 8 und 9, **dadurch gekennzeichnet, dass** der Katalysator in Mengen von 10⁻⁸ bis 10⁻³ mol, bezogen auf ein Mol Bisphenol, eingesetzt wird.

11. Verfahren nach den Ansprüchen 1, und 8 bis 10, **dadurch gekennzeichnet, dass** die Reaktoren und Apparate sowie Pumpen, Rohrleitungen und Annaturen bis zu Prozesstemperaturen von etwa 290°C aus nicht rostenden Stählen vom Typ Cr Ni (Mo) 18/10 gefertigt sind und oberhalb von etwa 290°C aus Ni-Basislegierungen vom Typ C gefertigt sind.

## Claims

1. Continuous process for producing polycarbonates by the transesterification of diaryl carbonates with dihydroxyaryl compounds, **characterised in that** condensation is carried out in the presence of quaternary onium compounds as catalysts, the final condensation stage being carried out without the further addition of catalysts and **in that** an oligocarbonate is produced by separating the monohydroxyaryl compound formed using quaternary onium compounds as catalysts which can be decomposed, substantially without leaving a residue, after preliminary condensation without separation of the monohydroxyaryl compound formed, in a plurality of subsequent flash/evaporator stages in which the temperature is elevated stepwise and the pressure is decreased stepwise, which oligocarbonate is thereafter condensed to form the finished polycarbonate in one or two successive basket-type reactors, without the addition of further amounts of the catalyst used or of a new, different catalyst, whilst the temperature is further elevated and the pressure is further reduced.

2. Polycarbonate, **characterised in that** it can be obtained by the continuous process according to claim 1.

3. Polycarbonate according to claim 2, **characterised in that** it is low in alkali and alkaline-earth ions.

4. Polycarbonate according to claims 2 to 3, **characterised in that** incorporated cleavage and decomposition products from the transesterification process are not detectable.

5. Polycarbonate according to claims 2 to 4, **characterised in that** it contains less than 1 ppm of phosphorus.

6. Products which may be obtained from polycarbonate according to claims 2 to 5.

7. Storage media according to claim 6.

8. Process according to claim 1, **characterised in that** the onium compound is tetraphenylphosphonium phenolate.

9. Process according to claims 1 and 8, **characterised in that** the tetraphenylphosphonium phenolate is added in a phenolic solution.

10. Process according to claims 1, 8 and 9, **characterised in that** the catalyst is used in quantities of 10⁻⁸ to 10⁻³ mol per mol bisphenol.

11. Process according to claims 1 and 8 to 10, **characterised in that** the reactors and apparatus as well as pumps, pipelines and fittings are produced from stainless steels of the type Cr Ni (Mo) 18/10 for processing temperatures up to approximately 290 °C and are produced from Ni base alloys of type C for temperatures above approximately 290 °C.

## Revendications

1. Procédé continu de préparation de polycarbonates par transestérification de carbonates de diaryle avec des composés dihydroxyaryle, **caractérisé en ce que** la condensation est réalisée en présence de composés d'onium quaternaire comme catalyseur, où l'étape terminale de polycondensation est réalisée sans autre addition de catalyseur, et **en ce que** l'on prépare un oligocarbonate en utilisant comme catalyseur, des composés d'onium quaternaire décomposables essentiellement sans résidu, après une précondensation sans séparation du composé monohydroxyaryle formé, en plusieurs étapes successives de distillation flash, à températures graduellement croissantes et pressions graduellement décroissantes, par séparation du composé monohydroxyaryle formé, lequel oligocarbonate est condensé en polycarbonate final, dans un ou deux réacteurs à panier successifs, sans addition de quantités supplémentaires du catalyseur utilisé ou d'un autre nouveau catalyseur, à températures encore croissantes et pressions encore décroissantes.

2. Polycarbonate, **caractérisé en ce qu'**il est obtenu selon le procédé en continu suivant la revendication 1.

3. Polycarbonate selon la revendication 2, **caractérisé en ce qu'**il est pauvre en ions alcalins et alcalino-terreux.

4. Polycarbonate selon les revendications 2 à 3, **caractérisé en ce que** des produits de clivage et de décomposition incorporés, du processus de transestérification, ne sont pas détectables.

5. Polycarbonate selon les revendications 2 à 4, **caractérisé en ce qu'**il contient moins de 1 ppm de phosphore.

6. Produit obtenu à partir du polycarbonate selon les revendications 2 à 5.

7. Support d'enregistrement selon la revendication 6.

8. Procédé selon la revendication 1, **caractérisé en ce que** le composé d'onium est le phénolate de tétraphénylphosphonium.

9. Procédé selon les revendications 1 et 8, **caractérisé en ce que** le phénolate de tétraphénylphosphonium est ajouté en solution phénolique.

10. Procédé selon les revendications 1, 8 et 9, **caractérisé en ce que** le catalyseur est mis en oeuvre en quantités allant de 10⁻⁸ à 10⁻³ mole, sur base d'une mole de bisphénol.

11. Procédé selon les revendications 1 et 8 à 10, **caractérisé en ce que** les réacteurs et appareils, ainsi que les pompes, conduites et armatures sont réalisés en acier inoxydable jusqu'à des températures de processus d'environ 290°C, de type Cr Ni (Mo) 18/10 et au-delà de 290°C, en alliages à base de Ni de type C.
